# EUROPEAN PATENT APPLICATION

(11) **EP 2 131 149 A1**
(43) Date of publication of application: **09.12.2009**
(21) Application number: 07740141.2
(22) Date of filing: 28.03.2007
(51) Int. Cl.: G01C 21/00, G08G 1/0969

(54) **INFORMATION DISPLAY DEVICE, INFORMATION DISPLAY METHOD, INFORMATION DISPLAY PROGRAM, AND STORAGE MEDIUM**

(71) Applicant: Pioneer Corporation, Tokyo 153-8654 (JP)
(72) Inventor: SAKUMA, Koji, Kawagoe-shi Saitama 350-8555 (JP)
(74) Representative: Haley, Stephen
(86) International application number: PCT/JP2007/056703
(87) International publication number: WO 2008/120329

(57) **Abstract**

When an immigration determining unit (103) determines that there is an immigration inspection point along a route to a destination retrieved by a retrieving unit (102), an acquiring unit (104) acquires information related to the immigration inspection and a receiving unit (105) receives an input of user information related to immigration. Based on this information, it is determined whether each user satisfies requirements to clear each immigration inspection. If each user satisfies requirements to clear each immigration inspection, information indicating satisfaction of the requirements is output. If requirements to clear the immigration inspection are not satisfied, a searching unit (107) searches for a foreign diplomatic government agency where the user may apply for documents to clear the immigration inspection and an altering unit (108) alters the route to pass the foreign diplomatic government agency. An output unit (101) outputs the route to the destination.

## Description

### TECHNICAL FIELD

The present invention relates to an information display apparatus, information display method, information display program, and recording medium that display information concerning immigration inspection.

### BACKGROUND ART

Conventionally, information display apparatuses have been proposed that, when the user moves from one country or province to another, information from a data center is acquired and provided to the user, information such as that having significant impact in terms of local activities and behaviors (behavior information), laws particular to the region and traffic regulations (legal information), and currency information.

Among such information display apparatuses is an information display apparatus that in addition to domestic map information, stores in a map data storage unit, map data covering major roads in a neighboring country within a given range, and upon an instruction for route retrieval, searches for roads including those in a neighboring country to retrieve a guide route to a destination (for example, refer to Patent Document 1). This information display apparatus sets whether a guide route to a destination is to include only domestic roads (domestic priority) or may include roads of a neighboring country, and upon an instruction for route retrieval, retrieves a route to the destination according to the setting.

Further, an information display apparatus has been proposed that selects a language corresponding to the current position or a preliminarily set language, and correlates the selected language with map data for display (for example, refer to Patent Document 2). This information display apparatus displays text correlated with the map data in multiple languages simultaneously.

Another information display apparatus has been proposed that, when the standard time varies by region, the time displayed by a clock is changed according to the position of the user (for example, refer to Patent Document 3). This information display apparatus changes the estimated time of arrival at a destination to the local time at the destination when the standard time at the destination is different from that at the current position.

Patent Document 1: Japanese Patent Application Laid-Open Publication No. H10-82649
Patent Document 2: Japanese Patent Application Laid-Open Publication No. H11-219105
Patent Document 3: Japanese Patent Application Laid-Open Publication No. 2004-226302

### DISCLOSURE OF INVENTION

### PROBLEM TO BE SOLVED BY THE INVENTION

The technologies disclosed in Patent Documents 1 to 3 have a problem in that requirements for clearing immigration inspections cannot be presented in advance. Thus, if at a border check point when crossing a national border during travel or while driving, a user first realizes that a passport, visa, etc. are required, the user is unable to enter the country. Further, for example, upon entering a country, the user may not have passed through immigration inspections; however, upon leaving the country, it may be found that the user does not have a visa and the user may not be permitted to leave.

### MEANS FOR SOLVING PROBLEM

To solve the problems above and achieve an object, an information display apparatus according to the invention of claim 1 includes a retrieving unit that retrieves a route to a destination; an immigration determining unit that determines whether there is an immigration inspection point, where an immigration inspection is conducted, along the route retrieved by the retrieving unit; an acquiring unit that acquires information related to the immigration inspection, when the immigration determining unit determines that there is an immigration inspection point; a receiving unit that receives, for a user, an input of user information related to immigration; a clearance determining unit that determines whether the user satisfies requirements to clear the immigration inspection, based on the information related to the immigration inspection acquired by the acquiring unit and the user information related to immigration received by the receiving unit; and an output unit that outputs a determination result of the clearance determining unit.

An information display method according to the invention of claim 9 includes retrieving a route to a destination; determining whether there is an immigration inspection point, where an immigration inspection is conducted, along the route retrieved at the retrieving; acquiring information related to the immigration inspection, when at the determining it is determined that there is an immigration inspection point; receiving, for a user, an input of user information related to immigration; determining whether the user satisfies requirements to clear the immigration inspection, based on the information related to the immigration inspection acquired at the acquiring and the user information related to immigration received at the receiving; and an output unit that outputs a determination result from the determining whether the user satisfies requirements to clear the immigration inspection.

An information display program according to the invention of claim 10 causes a computer to execute the information display method according to the invention of claim 9.

A computer-readable recording medium according to the invention of claim 11 stores therein the information display program according to the invention of claim 10.

### BRIEF DESCRIPTION OF DRAWINGS

Fig. 1 is a functional diagram of an information display apparatus according to the present embodiment;
Fig. 2 is a flowchart of information display processing of the information display apparatus according to the present embodiment;
Fig. 3 is a block diagram of a hardware configuration of the navigation apparatus according to the present example;
Fig. 4 is a flowchart of processing executed by the navigation apparatus according to an example;
Fig. 5 is one example of an input screen;
Fig. 6 is a schematic of one example of processing to alter a route; and
Fig. 7 is a schematic for explaining processing to change an itinerary of multiple travelers.

### EXPLANATIONS OF LETTERS OR NUMERALS

- 100: information display apparatus
- 101: output unit
- 102: retrieving unit
- 103: immigration determining unit
- 104: acquiring unit
- 105: receiving unit
- 106: clearance determining unit
- 107: searching unit
- 108: altering unit
- 109: setting unit

### BEST MODE(S) FOR CARRYING OUT THE INVENTION

A preferred embodiment of an information display apparatus, an information display method, an information display program, and a recording medium according to the present invention will be explained with reference to the accompanying drawings.

### (Embodiment)

### (Functional Configuration of Information Display Apparatus)

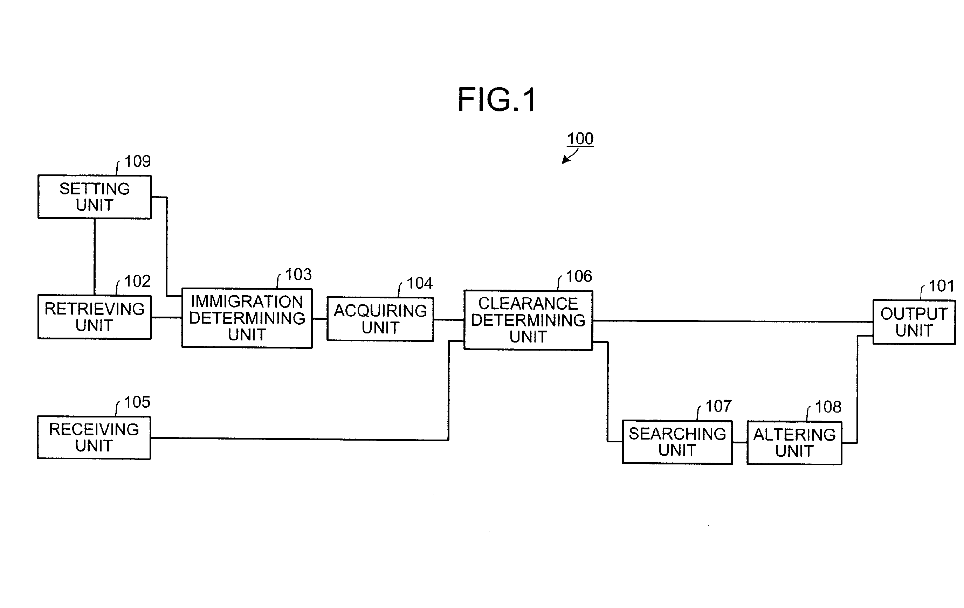

A functional configuration of an information display apparatus 100 according to an embodiment of the present invention will be explained. Fig. 1 is a functional diagram of an information display apparatus according to the present embodiment.

As depicted in Fig. 1, an information display apparatus 100 includes an output unit 101, a retrieving unit 102, an immigration determining unit 103, an acquiring unit 104, a receiving unit 105, a clearance determining unit 106, a searching unit 107, an altering unit 108, and setting unit 109. The output unit 101 includes a display screen that displays map data. In this example, map data is stored in a storage unit that is not depicted. The map data includes road network data formed by nodes and links, and image data that is drawn using features related to facilities, roads, and geographical formations (mountains, rivers, terrain). The map data may further include text information, information indicating the names and addresses of facilities, images of roads and facilities, etc. The output unit 101 may include a speaker that outputs audio information. Further, the output unit 101 outputs a result of a determination made by the clearance determining unit 106, described hereinafter, to the display screen, speaker, etc.

The retrieving unit 102 retrieves a route to a destination. Specifically, for example, the retrieving unit 102 may retrieve a route traversed by a mobile object such as a vehicle, and may retrieve a travel itinerary by a personal computer, etc. When a travel itinerary is to be retrieved, only the sequence in which countries are to be visited may be retrieved without retrieving detailed routes. Thus, a destination may be another country, and a route to a destination may straddle country borders. Further, the retrieving unit 102 may retrieve a route to a destination set by the setting unit 109.

The immigration determining unit 103 determines whether there is an immigration inspection point along a route to a destination retrieved by the retrieving unit 102. Immigration inspection points include, for example, immigration counters at border check points, airports, etc. Specifically, for example, when a national border is crossed by vehicle or on foot, or when the country of departure differs from the country of arrival for air travel, etc., the immigration determining unit 103 determines whether there is an immigration inspection point. The immigration determining unit 103 may further determine the number of immigration inspection points.

The immigration determining unit 103 may determine, for example, whether there is a possibility of an immigration inspection, based on information related to a destination set by the setting unit 109. For example, even if there is no immigration inspection point along a route retrieved by the retrieving unit 102, if the destination is a national border, it is conceivable that the border may be crossed and hence, it may be determined that there is a possibility of an immigration inspection. In this case, the subject of the determination is an immigration inspection point in a vicinity of the destination, which is the border.

The acquiring unit 104 acquires information related to immigration inspections when the immigration determining unit 103 determines that there is an immigration inspection point or that there is a possibility of an immigration inspection. Information related to immigration inspections is information such as the expiration date of travel documents (passport), visa status, nationals to whom entry is permitted, etc. The acquiring unit 104 may acquire the information related to immigration inspections from a storage unit that is not depicted, or may acquire the information from an external server via a network. Additionally, the acquiring unit 104 may acquire the information for only the immigration inspection point determined by the immigration determining unit 103.

The receiving unit 105 receives an input of user information related to immigration. User information related to immigration is information related to the visa(s) and passport of each user and respective expiration dates. Specifically, for example, the information includes the name, nationality, passport expiration date, and visa status of each user. The receiving unit 105 may receive an input of information for multiple users. Information input through the receiving unit 105 may be stored in a storage unit that is not depicted. In this case, if information is again received by the receiving unit 105, for example, by selecting the name of a user, other information stored therein may be read out.

The clearance determining unit 106, based on the information related to immigration inspections acquired by the acquiring unit 104 and the user information related to immigration received by the receiving unit 105, determines whether the user satisfies requirements to clear immigration inspections. Specifically, for example, the clearance determining unit 106 determines whether the nationality, passport expiration date, etc. of the user satisfies requirements to clear immigration inspections, and when a visa is required, determines whether the user has the visa. When the immigration determining unit 103 determines that there are multiple immigration inspection points along a route to a destination, the clearance determining unit 106, based on the information related to the immigration inspections acquired by the acquiring unit 104 and the user information related to immigration received by the receiving unit 105, determines whether the user will satisfy the requirements at each of the immigration inspection points.

Additionally, the clearance determining unit 106, based on the information related to immigration inspection acquired by the acquiring unit 104 and the user information related to immigration received by the receiving unit 105 for multiple users, determines whether each of the users satisfies the requirements to clear immigration. The clearance determining unit 106 may further determine whether each of the users satisfies requirements at each of the immigration inspection points. Accordingly, when even multiple users are traveling together in a group and a user joins the group or leaves the group in the midst of travel, it can be determined before each of the immigration inspection points whether each of the users will satisfy requirements to clear the immigration inspection.

The searching unit 107, when the clearance determining unit 106 determines that requirements to clear immigration inspections will not be satisfied, searches for a foreign diplomatic government agency where the user may apply for the appropriate documents to clear immigration. A foreign diplomatic government agency is, for example, an embassy or consulate. Specifically, for example, if the expiration date of a passport will not satisfy immigration inspection requirements, the clearance determining unit 106 searches for a foreign diplomatic government agency of the county of citizenship of the user, and if visa requirements are not satisfied, a foreign diplomatic government agency of the country of entry is sought.

The altering unit 108 alters the route to a destination retrieved by the retrieving unit 102 to pass the foreign diplomatic government agency retrieved by the searching unit 107. When the clearance determining unit 106 determines that a user is present who will not satisfy requirements to clear immigration for a given country, the altering unit 108 may alter the route retrieved by the retrieving unit 102 to bypass the given country or may, for example, alter the sequence in which the countries are visited. Further, the altering unit 108 may, for example, alter the route for only the user who does not satisfy immigration requirements by having the user travel by air so that the given country is not entered. Thus, the user may alter the route (itinerary) as desired.

### (Information Display Processing of Information Display Apparatus)

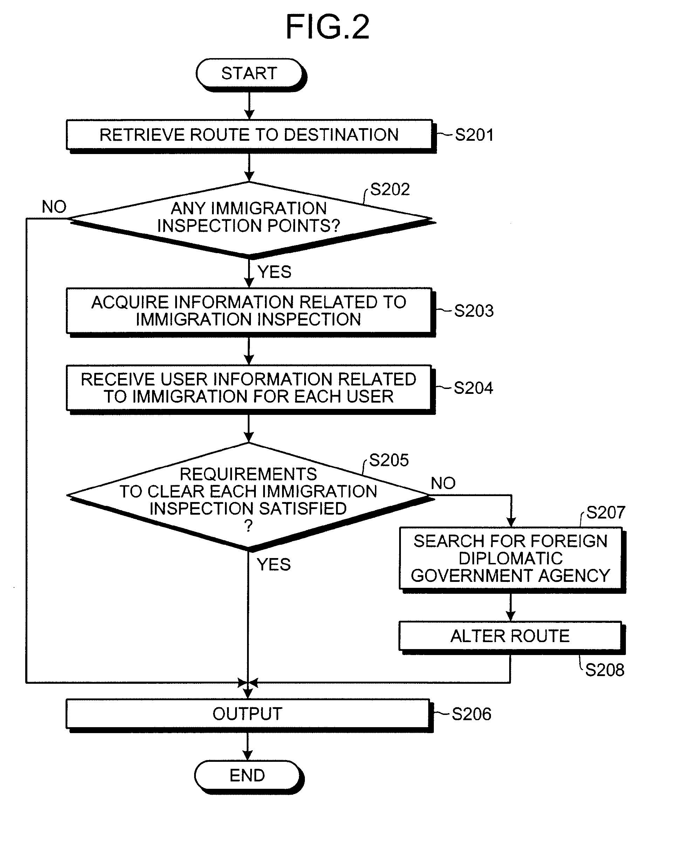

Information display processing of the information display apparatus 100 will be explained. Fig. 2 is a flowchart of information display processing of the information display apparatus according to the present embodiment. As depicted in Fig. 2, the retrieving unit 102 retrieves a route to a destination (step S201). The immigration determining unit 103 determines whether there are any immigration inspection points along the route retrieved at step S201 (step S202).

At step S202, if it is determined that there is an immigration inspection point (step S202: YES), the acquiring unit 104 acquires information related to each immigration inspection (step S203), and the receiving unit 105 receives, for each user, user information related to immigration (step S204). Based on the information related to each immigration inspection acquired at step S203 and the user information related to immigration received for each user at step S204, it is determined whether each of the users will satisfy the requirements at each immigration inspection (step S205).

At step S205, if it is determined that each of the users will satisfy requirements at each immigration inspection (step 205: YES), information indicating that each user satisfies requirements for each immigration inspection is output (step S206), ending a series of the processing. At step S206, information indicating that each of the users satisfies requirements for each immigration inspection is, for example, audio and/or text information stating, "Documents required for immigration are in order". On the other hand, at step S202, if it is determined that there are no immigration inspection points (step S202: NO), processing proceeds to step S206, and the route retrieved at step S201 is output, ending a series of the processing.

Further, at step S205, if each of the users does not satisfy the requirements at each immigration inspection (step S205: NO), i.e., if there is a user who does not satisfy requirements to clear an immigration inspection, the searching unit 107 searches for a foreign diplomatic government agency where the user may apply for the appropriate documents (step S207). The altering unit 108 alters the route retrieved at step S201, to pass the foreign diplomatic government agency retrieved at step S207 (step S208), and the processing proceeds to step S206. At step S206, the route altered at step S208 is output to the display screen, ending a series of the processing.

In the flowchart depicted in Fig. 2, when the requirements of each immigration inspection are not satisfied at step S205: NO, a foreign diplomatic government agency is sought at step S207; however, configuration is not limited hereto. Specifically, for example, the route may be altered to not pass through the country for which requirements to clear immigration are not met. Further, for example, when multiple immigration inspection points are to be passed during travel, only the route of a user who does not satisfy requirements to clear immigration may be altered such as by air travel, or the sequence in which the countries are visited may be altered, etc. Further, for example, before the route is retrieved at step S201, information related to the destination, which may be a national border, may be acquired based on the destination set by the setting unit 109, and at step S202, it may be determined whether there is a possibility of an immigration inspection. In this case, an immigration inspection point in the vicinity of the destination is targeted.

Further, in the flowchart depicted in Fig. 2, when it is determined that each of the users does not satisfy the requirements to clear each immigration inspection at step S205: NO, processing proceeds to step S207 and a foreign diplomatic government agency is sought; however, configuration is not limited hereto. Specifically, for example, without searching for a foreign diplomatic government agency, information may be displayed indicating that there is a user present who cannot clear immigration and further indicating the documents required, thereby ending a series of the processing.

As described, according to the information display apparatus 100 of the present embodiment, the immigration determining unit 103 determines whether there are any immigration inspection points along the route to the destination retrieved by the retrieving unit 102. If it is determined that there is an immigration inspection point, based on the information related to the immigration inspection acquired by the acquiring unit 104 and the user information related to immigration received by the receiving unit, the clearance determining unit 106 determines whether the user satisfies requirements to clear the immigration inspection, and outputs the result of the determination to the output unit 101.

Thus, even if there is an immigration inspection point along a route to a destination, immigration requirements can be presented to the user in advance. Consequently, when a national border is to be crossed during travel or while on a drive, at the time that a route to a destination is set, the user is able to know the requirements for clearing the immigration inspection at a border check point, and thus, helping to prevent the user from forgetting his/her passport, visa, etc. essential for immigration.

Further, according to the information display apparatus 100, when the immigration determining unit 103 determines that there are multiple immigration inspection points along a route to a destination, based on the information related to the immigration inspections acquired by the acquiring unit 104 and the user information related to immigration received by the receiving unit 105, the clearance determining unit 106 determines whether the user will satisfy the requirements to clear each of the immigration inspections.

Thus, even when there are multiple immigration inspection points along a route to a destination, respective immigration requirements can be provided to the user in advance. Consequently, when multiple national borders are crossed during travel or while on a drive, etc., the user is able to know the requirements for each border check point at the time when the route to the destination is set. Hence, even when there are multiple immigration inspection points along a route to a destination, the user can be prevented from forgetting his/her passport, visa, etc. essential for each immigration inspection, thereby, enabling the user to enjoy a comfortable journey, drive, etc. to the destination.

According to the information display apparatus 100, the receiving unit 105 receives, for multiple users, an input of user information related to immigration and the clearance determining unit 106 determines whether each of the users satisfies requirements to clear immigration. Thus, when there are multiple users, immigration requirements can be provided for each user, and consequently, when multiple users travel together and will cross a national border during their travel, while on a drive, etc., requirements for clearing immigration at the border check point can be known for each user at the time that a route to a destination is set. Hence, all of the users traveling together can be prevented from forgetting passports, visas, etc. essential for immigration, thereby, enabling the users to enjoy a comfortable journey, drive, etc. to a destination.

According to the information display apparatus 100, based on the information related to immigration inspection acquired by the acquiring unit 104 and the user information related to immigration received for multiple users by the receiving unit 105, the clearance determining unit 106 determines whether each of the users satisfy requirements to clear immigration inspections. Hence, when there are multiple users and even if there are multiple immigration inspection points along a route to a destination, requirements for clearing each immigration inspection can be provided for each user in advance.

Consequently, when multiple users travel together and will cross multiple national borders during their travel, while on a drive, etc., requirements for clearing immigration at each border check point can be known for each user at the time that a route to a destination is set. Thus, even when there are multiple immigration inspections along a route to a destination, all of the users traveling together can be prevented from forgetting passports, visas, etc. essential for immigration, enabling the users to enjoy a comfortable journey, drive, etc. to a destination.

According to the information display apparatus 100, when the clearance determining unit 106 determines that there is a user present who does not satisfy requirements to clear immigration, the searching unit 107 searches for a foreign diplomatic government agency where the user may apply for the appropriate documents to clear immigration, and the altering unit 108 alters the retrieved route to pass the foreign diplomatic government agency. Hence, a user who does not satisfy requirements to clear immigration can be guided to a foreign diplomatic government agency where the user may apply for the appropriate documents to clear immigration. Consequently, the user is able to clear immigration and enjoy a comfortable journey, drive, etc. to a destination.

According to the information display apparatus 100, when the clearance determining unit 106 determines that there is a user who does not satisfy requirements to clear immigration for a given country, the altering unit 108 alters the route to bypass the given country. Hence, the destination can be reached without passing through countries for which entry is prohibited due to the nationality, date of passport expiration, etc. of the user. Consequently, the route can be altered to one that only passes through countries for which entry is permitted for all users traveling together, enabling the users to enjoy a comfortable journey, drive, etc. that crosses national borders to a destination.

### [Example]

An example of the present invention will be explained. The present example is an example in which the information display apparatus 100 is implemented by a navigation apparatus equipped on mobile object such as a vehicle (including, four-wheeled vehicles, two-wheeled vehicles).

### (Hardware Configuration of Navigation Apparatus)

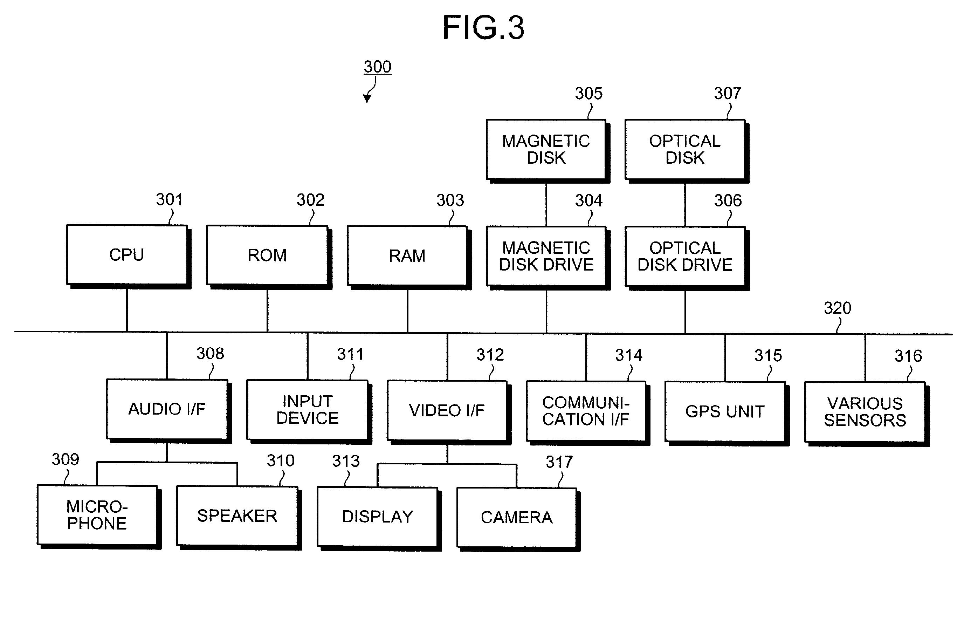

A hardware configuration of a navigation apparatus 300 according to the present example will be explained. Fig. 3 is a block diagram of a hardware configuration of the navigation apparatus according to the present example. As depicted in Fig. 3, the navigation apparatus 300 includes a CPU 301, a ROM 302, a RAM 303, a magnetic disk drive 304, a magnetic disk 305, an optical disk drive 306, an optical disk 307, an audio I/F (interface) 308, a microphone 309, a speaker 310, an input display 311, a video I/F 312, a display 313, a communication I/F 314, a GPS unit 315, various sensors 316, and a camera 317, respectively connected through a bus 320.

The CPU 301 administers overall control of the navigation apparatus 300. The ROM 302 stores therein programs such as a boot program, a data update program, an immigration inspection point determining program, and an immigration inspection clearance determining program. The RAM 303 is used as a work area of the CPU 301, i.e., the CPU 301, while using the RAM 303 as a work area, executes various programs recorded on the ROM 302 to generally control the navigation apparatus 300.

The immigration inspection point determining program determines whether there are any immigration inspection points along a route to a destination. Specifically, when a route to a destination passes through a border check point, the immigration inspection point determining program determines whether there is a point where immigration inspection is conducted.

When an immigration inspection point will be passed, the immigration inspection clearance determining program determines, for each user riding in the vehicle, whether requirements to clear immigration will be satisfied. Specifically, for example, the immigration inspection clearance determining program determines whether each user satisfies requirements to clear immigration at each immigration inspection point determined by the immigration inspection point determining program.

The magnetic disk drive 304 controls the reading and writing of data with respect to the magnetic disk 305 under the control of the CPU 301. The magnetic disk 305 records the data written under the control of the magnetic disk drive 304. The magnetic disk 305 may be HD (hard disk) or FD (flexible disk), for example.

The optical disk drive 306 controls the reading and writing of data with respect to the optical disk 307 under the control of the CPU 301. The optical disk 307 is a removable recording medium having data read out under the control of the optical disk drive 306. A writable recording medium may be utilized for the optical disk 307. The removable recording medium may be a medium other than the optical disk 307, such as an MO and a memory card.

Exemplary information recorded on the magnetic disk 305 includes map data and function data. The map information includes background data representing features such as buildings, rivers, and ground surfaces, and road shape data indicative of road shapes, and is made up of data files sorted by districts.

The road shape data also include traffic condition data. The traffic condition data includes, for example, information indicative of the presence of traffic lights, crosswalks, and presence of entrances/exits and junctions of expressways for the nodes, and lengths (distances) of links, road widths, directions of travel, road types (such as expressway, toll road, general road), etc., for the links.

The function data is data three-dimensionally representing shapes of facilities on the map, text data indicative of explanations of the facilities, and various data other than the map data. The map data and the function data are recorded in a state of blocks sorted by district or function. Specifically, for example, the map data is recorded in blocks sort able by district such that respective blocks represent predetermined districts on the map displayed on a display screen. For example, the function data is recorded in multiple blocks sort able by function such that each block implements one function.

In addition to the three-dimensional data and the text data described above, the function data is data including data for implementing functions of program data that implement route searches, calculation of time required, route guidance, etc. The map data and the function data are sorted into data files according to district and function, respectively.

The audio I/F 308 is connected to the microphone 309 for audio input and the speaker 310 for audio output. Sounds received by the microphone 309 are A/D-converted within the audio I/F 308. The microphone 309 is disposed near a sun visor of the vehicle and one or more of the microphones 309 may be disposed. The speaker 310 outputs sounds of given audio signals subjected to D/A conversion in the audio I/F 308. The sounds input from the microphone 309 may be recorded as audio data on the magnetic disk 305 or the optical disk 307.

The input device 311 includes a remote controller, a keyboard, a touch panel, etc. having keys for entering characters, numeric values, and various instructions. The input device 311 may be implemented in single form such as a remote controller, a keyboard, and a touch panel, or may be implemented in multiple forms.

The video I/F 312 is connected to the display 313. Specifically, the video I/F 312 is made up of, for example, a graphic controller that generally controls the display 313, a buffer memory such as VRAM (Video RAM) that temporarily records immediately displayable image information, and a control IC that controls the display 313 based on image data output from a graphic controller.

The display 313 displays icons, cursors, menus, windows, or various data such as characters and images. The display 313 draws the above map data two-dimensionally or three-dimensionally. The map data displayed on the display 313 can be superimposed with a mark, etc., representative of the current position of the vehicle equipped with the navigation apparatus 300. The current position of the vehicle is calculated by the CPU 301.

For example, a CRT, a TFT liquid crystal display, a plasma display, etc., may be employed as the display 313. The display 313 is disposed near the dashboard of the vehicle. The display 312 may be disposed in plural in the vehicle in such a way that the displays are disposed in the vicinity of the backseat of the vehicle as well as near the dashboard of the vehicle.

The communication I/F 314 is wirelessly connected to a network and functions as an interface between the navigation apparatus 300 and the CPU 301. The communication I/F 314 is wirelessly connected to a communication network such as the internet and also functions as an interface between this communication network and the CPU 301.

The communication network includes LAN, WAN, public line network, portable telephone network, etc. Specifically, the communication I/F 314 is made up of, for example, an FM tuner, VICS (Vehicle Information and Communication System)/beacon receiver, a wireless radio navigation device, and other navigation devices and acquires road traffic information, such as road congestion and traffic regulations, distributed from VICS centers. VICS is a registered trademark.

The GPS unit 315 receives signals from GPS satellites and outputs information indicative of the current position of the vehicle. The information output from the GPS unit 315 is used along with values output from the various sensors 316 (described hereinafter) when the CPU 301 calculates the current position of the vehicle. The information indicative of the current position is information specifying one point on map information, for example, latitude/longitude and altitude.

The various sensors 316 are those outputting information for determining the position and behavior of the vehicle, such as a vehicular speed sensor, an acceleration sensor, and an angular-speed sensor. The values output from the various sensors 316 are used by the CPU 301 for calculating the current position of the vehicle and calculating changes in velocity and direction.

The camera 317 captures images inside or outside the vehicle. The images may be still images or moving images and, for example, the camera 317 captures images of behaviors of a passenger inside the vehicle and outputs the captured images to a recording medium such as the magnetic disk 305 and the optical disk 307 through the video I/F 312. The camera 317 captures images of conditions outside the vehicle and outputs the captured images to the recording medium such as the magnetic disk 305 and the optical disk 307 through the video I/F 312. The camera 317 has an infrared camera function, and distributions of surface temperatures of objects present inside the vehicle may be compared relatively based on the image information captured with the use of the infrared camera function. The images output to the recording medium are overwritten and saved.

Functions of the output unit 101, the retrieving unit 102, the immigration determining unit 103, the acquiring unit 104, the receiving unit 105, the clearance determining unit 106, the searching unit 107, the altering unit 108, and the setting unit 109 of the information display apparatus 100 depicted in Fig. 1 are implemented by the execution of relevant programs by the CPU 301 using the ROM 302, the RAM 303, the magnetic disk 305, the optical disk 307, etc. of the navigation apparatus depicted in Fig. 3 to control each of the components of the navigation apparatus 300.

In other words, the navigation apparatus 300 according to the example executes the information display program stored on the ROM 302 serving as a recording medium in the navigation apparatus 300, thereby enabling the functions of the information apparatus depicted in Fig. 1 to be executed according to the information display processing depicted in Fig. 2.

### (Processing of Navigation Apparatus)

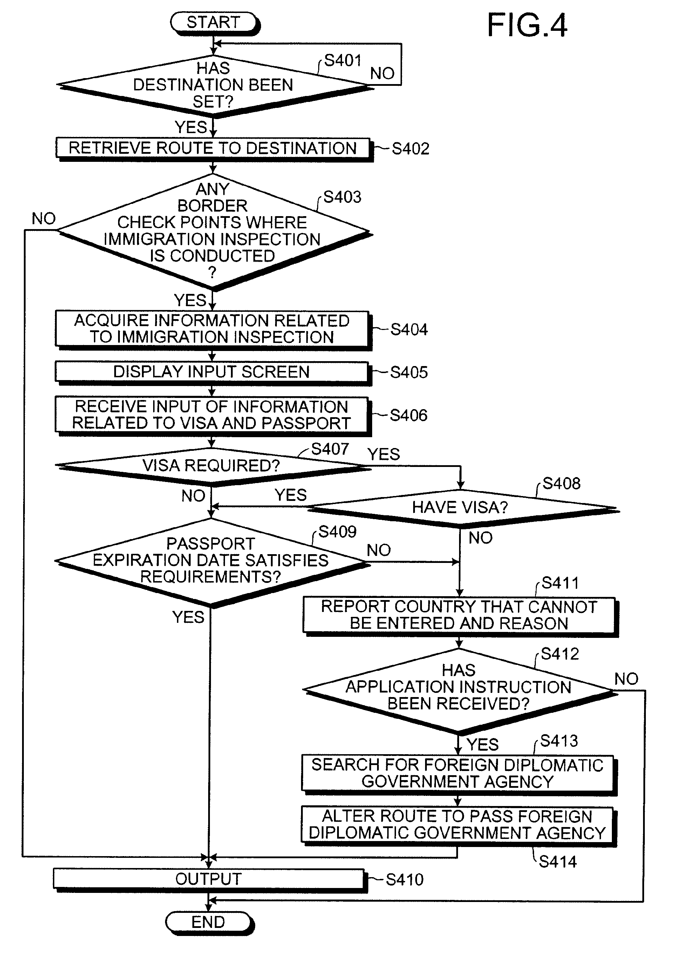

Processing by the navigation apparatus 300 will be explained. Fig. 4 is a flowchart of processing executed by the navigation apparatus according to the example. As depicted in Fig. 4, waiting occurs until a destination is set (step S401: NO). When a destination has been set (step S401: YES), a route to the destination set at step S401 is retrieved (step S402).

It is determined whether there are any immigration inspection points (border check points) along the retrieved route (step S403). At step S403, if it is determined that there is a border check point where an immigration inspection is conducted (step S403: YES), information related to the immigration inspection at each border check point is acquired (step S404). The display 313 displays an input screen (step S405) and an input of information related to visa(s) and passport by a user is received (step S406). At step S406, information related to the visas and passports of multiple users may be received. The information related to visas and passports includes the name, nationality, passport expiration date, visa status, visa type, etc. of each user.

Based on the information related to the immigration inspection at each border check point acquired at step S404 and the user information related to visas and passports received at step S406, it is determined whether a visa is required for each of the border check points (step S407). At step S407, if it is determined that a visa is required (step S407: YES), it is determined whether each user has the required visa (step S408).

At step S407, if it is determined that no visa is required (step S407: NO), or at step S408, if it is determined that each user has the required visa (step S408: YES), it is determined whether the passport expiration date satisfies requirements (step S409). At step S409, if it is determined that the passport expiration date satisfies requirements (step S409: YES), information is output indicating that each user satisfies the requirements to clear each immigration inspection (step S410), ending a series of the processing. On the other hand, at step S403, if it is determined that there are no border check points where immigration inspection is conducted (step S403: NO), processing proceeds to step S410 and the route to the destination retrieved at step S402 is displayed.

At step S408, if it is determined that a user does not have a required visa (step S408: NO), or at step S409, if it is determined that a passport expiration date will not satisfy requirements (step S409: NO), the concerned user is informed of the country that cannot be entered and the reason (step S411). It is determined whether an application instruction has been received for documents required for immigration with respect to the country that cannot be entered as reported at step S411 (step S412). The determination of whether an application instruction has been received at step S412 may be, for example, a determination of whether an instruction input by a user has been received.

At step S412, if an application instruction has been received (step S412: YES), a foreign diplomatic government agency where the user may apply for documents to clear immigration is searched for (step S413). If at step S408: NO, a user does not have a required visa, a foreign diplomat government agency of the country that the user wishes enter is searched for at step S413. Further, at step S409: NO, if a passport expiration date will not satisfy requirements, a foreign diplomatic government agency of the country of citizenship of the user is search for.

The route to the destination retrieved at step S402 is altered to pass the foreign diplomatic government agency retrieved at step S413 (step S414), and the processing proceeds to step S410. In this case, at step S410, the route altered at step S414 to pass the foreign diplomatic government agency is displayed on the display 313. Further, at step S412, if no application instruction has been received (step S412: NO), a series of the processing ends.

### (Example of Input Screen)

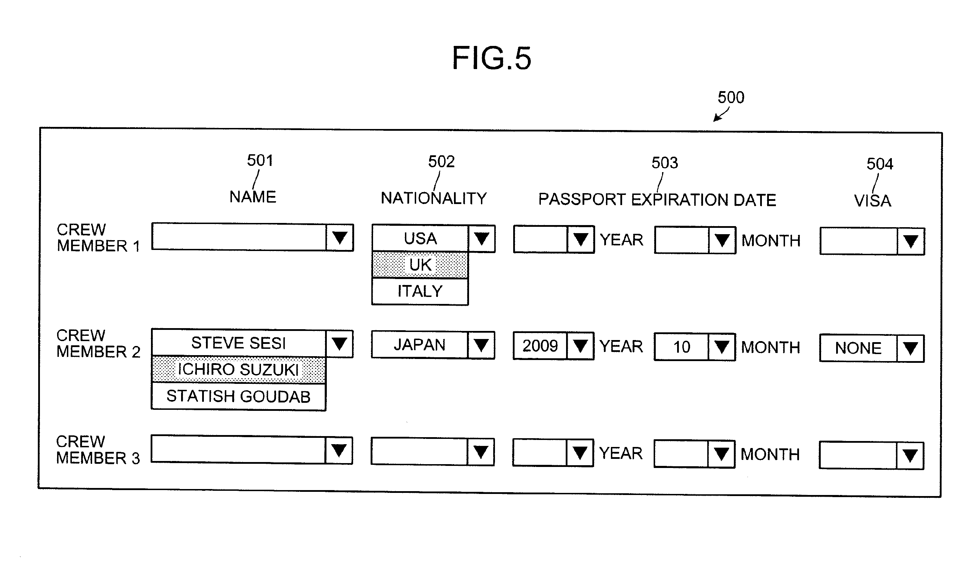

With reference to Fig. 5, the input screen displayed at step S405 depicted in Fig. 4 will be explained. Fig. 5 is one example of an input screen. As depicted in Fig. 5, an input screen 500 includes a name column 501, a nationality column 502, a passport expiration date column 503, and a visa column 504 for each user. In the name column 501, the name of each user or a name enabling identification of each user may be input.

In the nationality column 502, the nationality of each user is input. In the passport expiration date column 503, the expiration date of the passport of each user is input. In the visa column 504, with respect to each user, whether a visa is held is input and for user having a visa, the type is input. The input of the above information may be by selection from a pull-down menu.

The information input through the input screen 500 may be stored to the magnetic disk 305 and the optical disk 307. In this case, by selection from a pull-down menu of names already stored, other stored information correlated with the name may be automatically selected. Specifically, by selecting the name of the second crew member (user) "Suzuki, Ichiro" in the name column 501, "Japan" in the nationality column 502, "October 2009" in the passport expiration date column 503, and "None" in the visa column 504 may be automatically selected. Further, information selected from a pull-down menu may be changed.

### (Example of Processing to Alter Route)

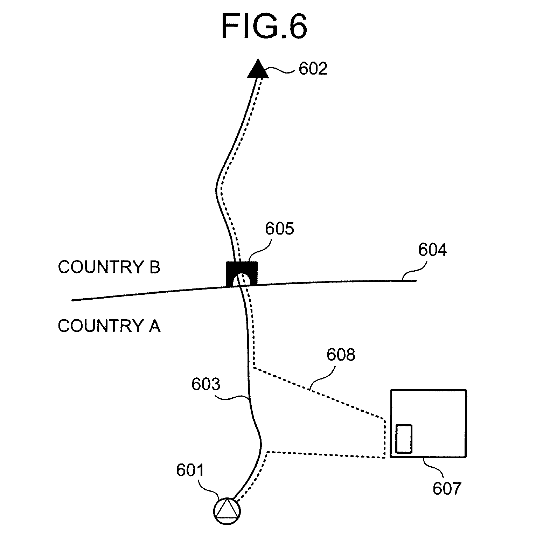

With reference to Fig. 6, processing to alter a route will be explained. Fig. 6 is a schematic of one example of processing to alter a route. As depicted in Fig. 6, a route 603 from a current position 601 in country A to a destination 602 in country B crosses the border 604 of country A and country B. Further, at the border 604, there is a border check point 605, where an immigration inspection is conducted. Therefore, according to the navigation system 300, at the current position 601 when the route 603 to the destination 602 is retrieved, information related to the immigration inspection at the border check point 605 is acquired and an input of information related to the visa(s) and the passport of each user that is to pass the border check point 605 is received.

Among the users to pass the border check point 605, if there is a user who does not satisfy requirements to clear the immigration inspection at the border check point 605, a foreign diplomatic government agency 607 is searched for so that the user may apply for documents to clear the immigration inspection. The route 603 is changed to a route 608 that passes the foreign diplomatic government agency 607 and the route 608 is displayed on the display 313.

### (Processing to Change Itinerary of Multiple Travelers)

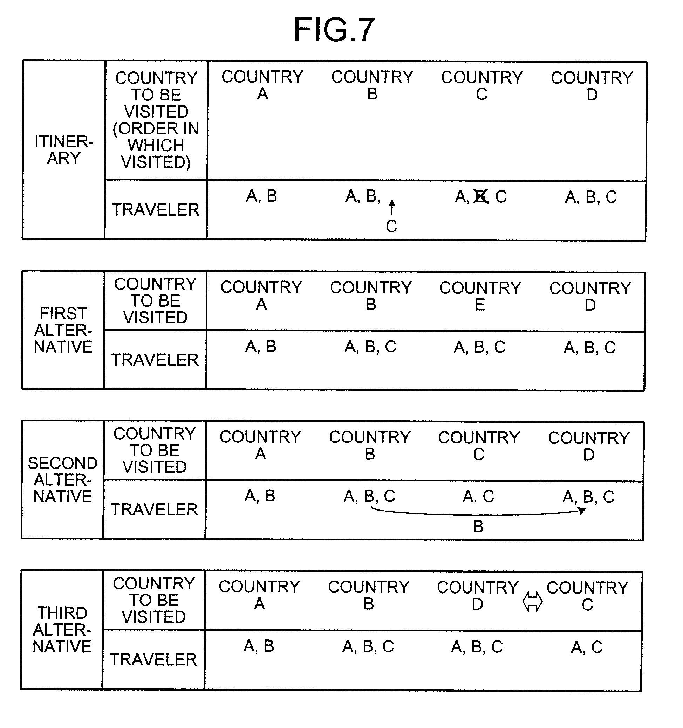

With reference to Fig. 7, processing to change the itinerary of multiple users (travelers) will be explained. Fig. 7 is a schematic for explaining processing to change the itinerary of multiple travelers. Each of the travelers may have different requirements for clearing each immigration inspection. Specifically, for example, the nationalities of the travelers may be different, the passport expiration dates of the travelers may by different, or visa requirements for each traveler may be different. Fig. 7 depicts an itinerary in which travelers A and B will enter country B from country A and in country B, traveler C will join travelers A and B. Further, travelers A, B, and C will enter country C from country B, and enter country D from country C. Here, it is assumed that traveler B does not satisfy requirements to clear immigration into country C and cannot enter country C.

In this manner, when among travelers traveling together, there is a traveler who cannot enter a given country, an alternative itinerary is retrieved. As a first alternative, the given country that cannot be entered by the traveler is changed to a country that can be entered by the traveler. Specifically, for example, travelers A, B, and C, without going to country C where traveler B cannot enter, travelers A, B, and C go to country E where all three travelers can enter. Here, for example, if travel is by vehicle, country E is a neighboring country of B and C.

As a second alternative, the given country may be bypassed by air travel. Specifically, for example, traveler B travels by air from country B to country D without entering country C and rejoins travelers A and C. Further, in the second alternative, although an example in which air travel is used was given, the given country may be bypassed by sea travel.

As a third alternative, the sequence in which countries are to be visited may be changed. Specifically, for example, travelers A, B, and C change the sequence in which countries C and D are visited to enter country D from country B and thereafter, to enter country C from country D. Here, for example, if travel is by vehicle, countries B, C, and D are neighboring countries.

As explained, according to the navigation apparatus 300 of the present example, the immigration determining unit 103 determines whether there are any immigration inspection points along the route retrieved by the retrieving unit 102. If it is determined that there is an immigration inspection point, based on information related to the immigration inspection acquired by the acquiring unit 104 and the user information related to immigration received by the receiving unit 105, the clearance determining unit 106 determines whether the user satisfies requirements to clear the immigration inspection, and the result of the determination is output the output unit 101.

Thus, even if there is an immigration inspection point along a route to a destination, immigration requirements may be provided to the user in advance. Consequently, when a national border is crossed during travel or while on a drive, the user is able to know, at the time when the route to the destination is set, the requirements to clear the immigration inspection at the border check point. Hence, the user may be prevented from forgetting his/her passport, visa, etc. essential for immigration.

According to the navigation apparatus 300, when the immigration determining unit 103 determines that there are multiple immigration inspection points along the route to the destination, based on information related to the immigration inspections acquired by the acquiring unit 104 and user information related to immigration received by the receiving unit 105, the clearance determining unit 106 determines whether the user satisfies requirements to clear each of the immigration inspections.

Hence, even when there are multiple immigration inspection points along a route to a destination, requirements for each immigration inspection may be provided to the user in advance. Consequently, when multiple national borders are crossed during travel or while on a drive, etc., the user may know, at the time when the route to the destination is set, the requirements to clear the immigration inspections at each border check point. Hence, even when there are multiple immigration inspections along the route to a destination, the user may be prevented from forgetting his/her passport, visa, etc. essential for each immigration inspection and may enjoy a comfortable journey, drive, etc. to a destination.

According to the navigation apparatus 300, the receiving unit 105 receives, for multiple users, an input of user information related to immigration and the clearance determining unit 106 determines whether each of the users satisfies requirements to clear immigration. Thus, when there are multiple users, immigration requirements can be provided for each user, and consequently, when multiple users travel together and will cross a national border during their travel, while on a drive, etc., requirements for clearing immigration at the border check point can be known for each user at the time that a route to a destination is set. Hence, all of the users traveling together can be prevented from forgetting passports, visas, etc. essential for immigration, thereby, enabling the users to enjoy a comfortable journey, drive, etc. to a destination.

According to the navigation apparatus 300, based on the information related to immigration inspection acquired by the acquiring unit 104 and the user information related to immigration received for multiple users by the receiving unit 105, the clearance determining unit 106 determines whether each of the users satisfy requirements to clear immigration inspections. Hence, when there are multiple users and even if there are multiple immigration inspection points along a route to a destination, requirements for clearing each immigration inspection can be provided for each user in advance.

Consequently, when multiple users travel together and will cross multiple national borders during their travel, while on a drive, etc., requirements for clearing immigration at each border check point can be known for each user at the time that a route to a destination is set. Thus, even when there are multiple immigration inspections along a route to a destination, all of the users traveling together can be prevented from forgetting passports, visas, etc. essential for immigration, enabling the users to enjoy a comfortable journey, drive, etc. to a destination.

According to the navigation apparatus 300, when the clearance determining unit 106 determines that there is a user present who does not satisfy requirements to clear immigration, the searching unit 107 searches for a foreign diplomatic government agency where the user may apply for the appropriate documents to clear immigration, and the altering unit 108 alters the retrieved route to pass the foreign diplomatic government agency. Hence, a user who does not satisfy requirements to clear immigration can be guided to a foreign diplomatic government agency where the user may apply for the appropriate documents to clear immigration. Consequently, the user is able to clear immigration and enjoy a comfortable journey, drive, etc. to a destination.

According to the navigation apparatus 300, when the clearance determining unit 106 determines that there is a user who does not satisfy requirements to clear immigration for a given country, the altering unit 108 alters the route to bypass the given country. Hence, the destination can be reached without passing through countries for which entry is prohibited due to the nationality, date of passport expiration, etc. of the user. Consequently, the route can be altered to one that only passes through countries for which entry is permitted for all users traveling together, enabling the users to enjoy a comfortable journey, drive, etc. that crosses national borders to a destination.

As explained, according to the information display apparatus, the information display method, the information display program, and recording medium of the present invention, the navigation apparatus 300, when there is an immigration inspection point 605 along a route 603 from the current position 601 to a destination 602, enables determination of whether each user satisfies requirements to clear the immigration inspection at each immigration inspection point 605, based on information related to the immigration inspection at each border check point 605 and user information related to the visas and passports of each user and input through the input screen 500, and the result of the determination may be output.

Furthermore, among travelers traveling together, if there is a traveler who does not satisfy requirements to clear immigration, the route to the destination may be changed to a route that passes a foreign diplomatic government agency, or the country for which immigration cannot be cleared is bypassed, etc. Consequently, the requirements for clearing immigration may be confirmed for each user in advance and hence, the users can enjoy comfortable travel without being stopped at a border check point 605.

The information display method explained in the present embodiment may be implemented by a computer, such as a personal computer and a workstation, executing a program that is prepared in advance. The program is recorded on a computer-readable recording medium such as a hard disk, a flexible disk, a CD-ROM, an MO, and a DVD, and is executed by being read out from the recording medium by a computer. The program may be distributed through a network such as the Internet.

## Claims

1. An information display apparatus comprising:
a retrieving unit that retrieves a route to a destination;
an immigration determining unit that determines whether there is an immigration inspection point, where an immigration inspection is conducted, along the route retrieved by the retrieving unit;
an acquiring unit that acquires information related to the immigration inspection, when the immigration determining unit determines that there is an immigration inspection point;
a receiving unit that receives, for a user, an input of user information related to immigration;
a clearance determining unit that determines whether the user satisfies requirements to clear the immigration inspection, based on the information related to the immigration inspection acquired by the acquiring unit and the user information related to immigration received by the receiving unit; and
an output unit that outputs a determination result of the clearance determining unit.

2. The information display apparatus according to claim 1, wherein
the immigration determining unit determines that there is a plurality of immigration inspection points, and
the clearance determining unit, when the immigration determining unit determines that there is a plurality of immigration inspection points along the route to the destination, determines whether the user satisfies requirements to clear the immigration inspection at each of the immigration inspection points, based on the information related to the immigration inspection acquired by the acquiring unit and the user information related to immigration received by the receiving unit.

3. The information display apparatus according to claim 1, wherein
the receiving unit receives the user information related to immigration for a plurality of users, and
the clearance determining unit determines whether each of the users satisfies requirements to clear the immigration inspection, based on the information related to the immigration inspection acquired by the acquiring unit and the user information related to immigration received for each of the users by the receiving unit.

4. The information display apparatus according to claim 1, wherein the clearance determining unit determines, based on the information related to the immigration inspection acquired by the acquiring unit and user information related to immigration received for a plurality of users by the receiving unit, whether each of the users satisfies requirements to clear the immigration inspection at each immigration inspection point.

5. The information display apparatus according to claim 1 further comprising:
a searching unit that, when the clearance determining unit determines that there is a user who does not satisfy requirements to clear the immigration inspection, searches for a foreign diplomatic government agency where the user may apply for documents to clear the immigration inspection;
an altering unit that alters the route to the destination retrieved by the retrieving unit to pass the foreign diplomatic government agency retrieved by the searching unit.

6. The information display apparatus according to claim 1, wherein the altering unit, when the clearance determining unit determines that there is a user who does not satisfy requirements to clear the immigration inspection, alters the route to the destination retrieved by the retrieving unit to bypass a country for which the user does not satisfy the requirements to clear the immigration inspection.

7. The information display apparatus according to any one of claims 1 to 6, wherein the user information related to immigration received by the receiving unit includes information concerning a visa and a passport of each user and corresponding expiration dates.

8. An information display apparatus comprising:
a setting unit that sets a destination;
an immigration determining unit that, based on information related to the destination set by the setting unit, determines whether there is a possibility of an immigration inspection to be conducted;
an acquiring unit that, if the immigration determining unit determines that there is a possibility of an immigration inspection being conducted, acquires information related to the immigration inspection,
a receiving unit that receives, for a user, an input of user information related to immigration;
a clearance determining unit that determines, based on the information related to the immigration inspection acquired by the acquiring unit and the user information related to immigration received by the receiving unit, whether the user satisfies requirements to clear the immigration inspection; and
an output unit that outputs a determination result of the clearance determining unit.

9. An information display method comprising:
retrieving a route to a destination;
determining whether there is an immigration inspection point, where an immigration inspection is conducted, along the route retrieved at the retrieving;
acquiring information related to the immigration inspection, when at the determining it is determined that there is an immigration inspection point;
receiving, for a user, an input of user information related to immigration;
determining whether the user satisfies requirements to clear the immigration inspection, based on the information related to the immigration inspection acquired at the acquiring and the user information related to immigration received at the receiving; and
outputting a determination result obtained at the determining whether the user satisfies requirements to clear the immigration inspection.

10. An information display program causing a computer to execute the information display method according to claim 9.

11. A computer-readable recording medium storing therein the information display program according to claim 10.
